# EUROPÄISCHE PATENTSCHRIFT

(11) **EP 2 028 043 B1**
(45) Veröffentlichungstag und Bekanntmachung des Hinweises auf die Patenterteilung: **31.03.2010**
(21) Anmeldenummer: 08012403.5
(22) Anmeldetag: 09.07.2008
(51) Int. Cl.: B60P 7/08

(54) **Adapter für ein Kraftfahrzeug-Haltesystem**
Adapter for a motor vehicle holding system
Adaptateur pour un système de support de véhicule automobile

(30) Priorität: 13.07.2007 DE 102007033115; 13.12.2007 EP 07024219
(43) Veröffentlichungstag der Anmeldung: 25.02.2009
(73) Patentinhaber: YMOS GmbH, 55743 Idar-Oberstein (DE)
(72) Erfinder: Kley, Frank, 55767 Gimbweiler (DE)
(74) Vertreter: Ostermann, Thomas

(56) Entgegenhaltungen:
- DE-U1-202006 010 599
- US-A- 4 700 917
- US-A- 5 236 153
- US-B1- 6 309 006
- US-B1- 6 585 465

## Beschreibung

Die Erfindung betrifft einen Adapter für ein Kraftfahrzeug-Haltesystems im Bereich eines Kofferraums des Kraftfahrzeugs mit einem Gehäuse und einem an dem Gehäuse gelagerten Drehelement zur Verbringung des Adapters von einer Verschiebestellung in eine Arretierstellung und umgekehrt, wobei die Drehachse des Drehelementes senkrecht zu einer Längsachse einer in dem Kofferraum ortsfest angeordneten Schiene angeordnet ist.

Aus der DE 20 2006 010 599 U1 ist ein Adapter zur Befestigung von Ladegütern, Bändern und dergleichen in Fahrzeugen bekannt, der in einer Verschiebestellung entlang einer an einer Karosserie des Fahrzeugs befestigten Schiene verschiebbar gelagert ist. Dem Adapter ist ein beweglich gelagertes Rastelement als Klemmelement zugeordnet, das in einer Arretierstellung des Adapters unter Ausübung einer Haltekraft auf die Schiene drückt und den Adapter somit festlegt. Das Rastelement ist endseitig an einem Schenkel eines Hebels angeformt. Mittels einer Feder wird dieser Schenkel des Hebels selbsttätig gegen die Halteschiene gedrückt. Ein rechtwinklig zu dem Schenkel angeordneter weiterer Schenkel des Hebels dient als Betätigungselement, so dass durch Verschwenken des Hebels der Adapter von einer Arretierstellung in eine Verschiebestellung verbringbar ist. Nachteilig an der bekannten Haltevorrichtung ist, dass von einer Bedienperson zum Verschieben des Adapters stets eine durch die Feder vorgegebene Haltekraft aufgebracht werden muss. Zudem besteht die Gefahr, dass sich die Bedienperson dabei Finger einklemmen kann. Ferner ist von Nachteil, dass sich der Adapter in der Arretierstellung von der Schiene wegdrücken kann und somit die gewünschten Haltekräfte im Dauereinsatz nicht erzielbar sind.

Ein gattungsgemässer Halter ist auch in Dokument US 4 700 917 offenbart.

Aufgabe der vorliegenden Erfindung ist es, einen Adapter zur Befestigung von Gepäckstangen, Netzen, Taschen und dergleichen derart weiterzubilden, dass die Handhabung bzw. Bedienfreundlichkeit desselben verbessert wird und die Haltekräfte zum Festlegen des Adapters auf der Schiene dauerhaft erzielbar sind.

Zur Lösung dieser Aufgabe ist die Erfindung in Verbindung mit dem Oberbegriff des Patentanspruchs 1 dadurch gekennzeichnet, dass die Drehachse des Drehelementes und die Längsachse der Schiene einander schneiden, dass in dem Gehäuse ein um eine Schwenkachse drehbar gelagerter, vorgespannter Kipphebel angeordnet ist zur lösbaren Verbindung des Adapters mit der Schiene, dass die Schwenkachse des Kipphebels senkrecht zu der Drehachse des Drehelementes und parallel zur Längsachse der Schiene angeordnet ist und dass zwischen dem Drehelement und der Schiene eine Ohrenhülse angeordnet ist, derart, dass bei Drehung des Drehelementes um 90° Vorsprünge der Ohrenhülse entlang einer Kontur des Gehäuses gleiten bis in eine Endstellung, in der die Vorsprünge der Ohrenhülse Arme des Kipphebels in einer Arretierstellung desselben festlegen.

Der besondere Vorteil der Erfindung besteht darin, dass das Verbringen des Adapters von einer Verschiebestellung in eine Arretierstellung und umgekehrt durch das Drehen eines Drehelementes um eine Drehachse bewirkt wird. Die Drehachse verläuft hierbei senkrecht zur Längsachse der Schiene und schneidet diese. Hierdurch ist eine direkte Abstützung des Adapters auf der Schiene realisiert, bei der die in Richtung der Drehachse des Drehelementes wirkenden Klemmkräfte querkraft- und momentenfrei auf der Schiene abgestützt werden können. Gleichzeitig umfasst der Kipphebel die Schiene derart, dass Klemmkräfte den Adapter in einer zur Längsachse der Schiene und zur Drehachse des Drehelementes senkrecht stehenden Querrichtung und/oder in Richtung der Drehachse des Drehelementes gegen die Halteschiene drücken. Hierdurch kann eine sichere Fixierung des Adapters in der Arretierstellung desselben bewirkt werden. Indem der Kipphebel um eine Schwenkachse drehbar gelagert wird, kann eine spielfreie und toleranzarme Lagerung des Kipphebels im Gehäuse gewährleistet werden. Vorteilhaft reduzieren sich hierbei die Fertigungskosten und der Montageaufwand für den Adapter.

Nach einer bevorzugten Ausführungsform der Erfindung wird die Vorspannung des Kipphebels über eine zu demselben koaxial gelagerte Drehfeder bewirkt. Vorteilhaft ist hierbei eine querkraftsfreie, die Betätigung des Kipphebels begünstigende Lagerung desselben im Gehäuse des Adapters realisiert. Die Handhabung des Adapters kann mit geringen Betätigungskräften erfolgen. Gleichzeitig ist einem Verkanten oder Verkippen des Kipphebels - und damit einer schwergängigen Betätigung desselben - vorgebeugt.

Nach einer Weiterbildung der Erfindung ist zwischen der Ohrenhülse und einer an einer dem Drehelement zugewandten Fläche der Schiene anliegenden Verschlussscheibe eine vorgespannte Druckfeder angeordnet, mittels derer in der Arretierstellung des Kipphebels auf die Vorsprünge der Ohrenhülse eine den Kipphebel in der Arretierstellung festlegende Anpresskraft ausgeübt wird. Vorteilhaft wird hierdurch die Festlegung des Adapters auf der Schiene zum einen mittels des die Schiene umgreifenden Kipphebels und zum anderen mittels der Verschlussscheibe durch eine einzige gemeinsame Drehbewegung des Drehelementes bewirkt. Die Bedienfreundlichkeit und Handhabung des Adapters wird insofern verbessert. Gleichzeitig wird gewährleistet, dass der Adapter in der Verschiebestellung nur mit einer geringen Vorspannkraft gegen die Schiene drückt, so dass der Adapter in der Verschiebestellung mit wenig Kraftaufwand entlang der Schiene verschiebbar ist. In der Arretierstellung hingegen drückt die Druckfeder die Verschlussscheibe sowie den Kipphebel gegen die Schiene und gewährleistet auf diese Weise einen sicheren, dauerhaften Halt des Adapters.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

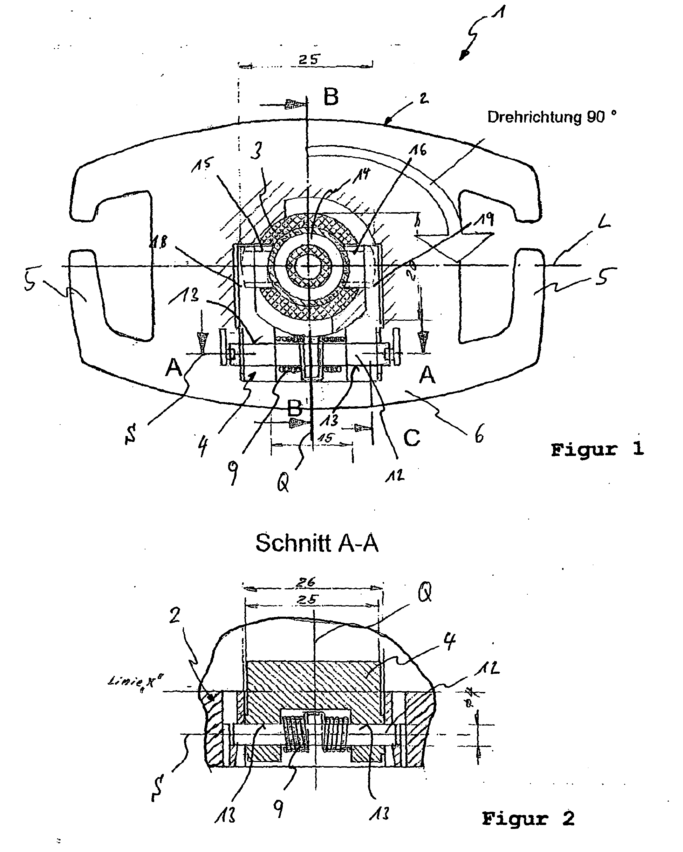

- Figur 1: eine Seitenansicht eines Adapters im Teilschnitt in Richtung einer (nicht dargestellten) Schiene,
- Figur 2: eine Schnittansicht durch einen Kipphebel entlang der Schnittlinie A-A in Figur 1,

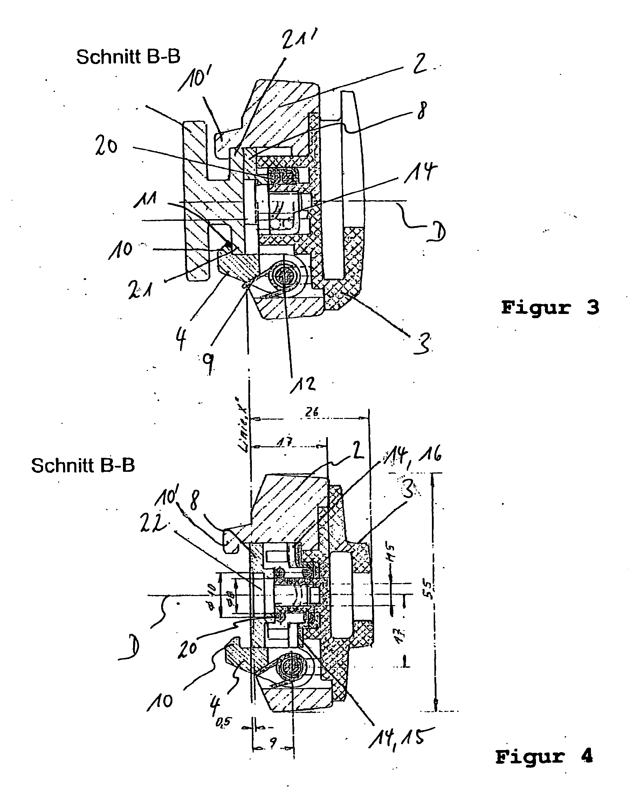

- Figur 3: eine Schnittansicht durch den Adapter in einer Verschiebestellung mit Schiene entlang einer Schnittlinie B-B in Figur 1,
- Figur 4: eine Schnittdarstellung des Adapters in einer Montagestellung ohne Schiene entlang einer Schnittlinie B-B in Figur 1,

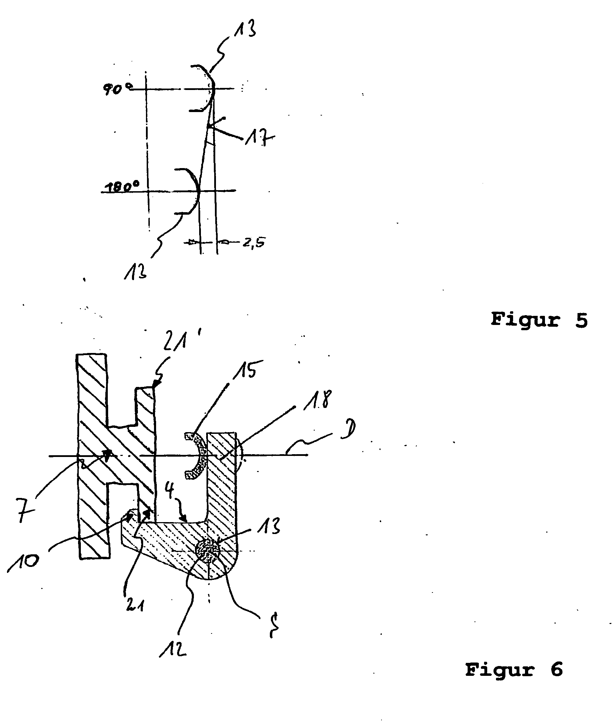

- Figur 5: eine in einem Gehäuse des Adapters vorgesehene Ablaufkurve (Kontur) und
- Figur 6: eine Schnittdarstellung des Kipphebels in einer Arretierstellung.

Ein Adapter 1 für ein Kraftfahrzeug-Haltesystem weist als wesentliche Bauelemente ein Gehäuse 2, einen Drehknopf 3 sowie einen Kipphebel 4 auf. Das Gehäuse 2 weist an gegenüberliegenden Stirnseiten Haltearme 5 auf, die derart ausgeformt sind, dass Bänder, Haken oder dergleichen in das Gehäuse 2 eingehängt werden können. Die Haltearme 5 ragen vorzugsweise paarweise von einem Mittelteil 6 des Gehäuses 2 in Richtung einer Längsachse L (Längsrichtung) einer Halteschiene 7 ab. Das Mittelteil 6 des Gehäuses 2 ist zur Aufnahme eines Drehelementes (Drehknopf 2) tellerförmig ausgebildet. Der Drehknopf 3 ist an dem Mittelteil 6 des Gehäuses 2 um eine senkrecht zu der Längsrichtung L der Schiene 7 verlaufende Drehachse D drehbar gelagert, die die Längsrichtung L der Schiene 7 schneidet.

Der Drehknopf 3 dient als Betätigungselement zum Verbringen einer als erstes Klemmelement ausgebildeten Verschlussscheibe 8 und des als zweites Klemmelement vorgesehenen Kipphebels 4 von einer Verschiebestellung, in der der Adapter 1 entlang der Schiene 7 verschiebbar gelagert ist, in einer Arretierstellung, in der der Adapter 1 an der Schiene 7 festgelegt ist, und umgekehrt. Die Verschlussscheibe 8 ist hierbei flächig ausgebildet. Sie ist bezüglich der Drehachse D des Drehknopfes 3 konzentrisch gelagert und weist in ihrem Flächenmittelpunkt eine kreisförmige Aussparung auf. Der Kipphebel 4 ist um eine senkrecht zur Drehachse D verlaufende Schwenkachse S drehbar in dem Gehäuse 2 gelagert. Die Schwenkachse S verläuft parallel zur Längsrichtung L der Schiene 7. Der Kipphebel 4 ist mittels einer Drehfeder 9 federnd gelagert, so dass der Adapter 1 zur Montage an der Schiene 7 unter Verschwenken des Kipphebels 4 entgegen der Schiene 7 in eine Verschiebestellung eingesetzt werden kann. Hierbei wird der Kipphebel 4 entgegen der Drehfeder 9 nach außen gedrückt und hintergreift dann unter Beaufschlagung mit einer Federkraft mit einer Nase 10 die in der dargestellten Ausführungsform doppel-T-förmige Halteschiene 7 von einer Rückseite 11 derselben. Der Kipphebel 4 und die Drehfeder 9 sind bezüglich der Schwenkachse mittels eines Kipphebelbolzens 12 konzentrisch gelagert. Zur Aufnahme des Kipphebelbolzens 12 weist der Kipphebel 4 Augen 13 auf. Die Drehfeder 9 ist hierbei bezüglich einer Querebene Q des Adapters 1 symmetrisch in dem Gehäuse 2 angeordnet.

In einer Montagestellung des Adapters 1 steht die Verschlussscheibe 8 gegenüber dem Gehäuse 2 vor, beispielsweise um 0,5 mm. Dieser Versatz wird durch eine Druckfeder 20 erreicht, die sich auf der einen Seite an einer Ohrenhülse 14 und auf der anderen Seite an der Verschlussscheibe 8 abstützt. Dabei wird die Ohrenhülse 14 gegen den Drehknopf 3 und die Verschlussscheibe gegen eine Bundschraube 22 gedrückt. Die Bundschraube 22 ist hierbei in den Drehknopf 3 eingeschraubt.

Wird nun der Adapter 1 mit dem Kipphebel 4 auf die Schiene 7 aufgesetzt, so weicht der Kipphebel 4 gegen die Drehfeder 9 aus, bis der Kipphebel 4 mit seiner Nase 10 infolge der von der Drehfeder 9 ausgeübten Kraft den Vorsprung 21 der Schiene 7 umgreift. Im gleichen Moment wird die Druckfeder 20 gespannt und die Verschlussscheibe 8 gegen die dem Drehknopf 3 zugewandte Fläche der Schiene 7 gepresst. Die Anpresskraft in der nunmehr erreichten Verschiebestellung ergibt sich hierbei multiplikativ aus der Federsteifigkeit der Druckfeder 20 und der Größe des Versatzes, der in der Montagestellung zwischen der Verschlussscheibe 8 und dem Gehäuse 2 vorgesehen ist.

In der Verschiebestellung des Adapters 1 ist dieser an eine beliebige Stelle der Schiene 7 verschiebbar. Zum Verbringen des Adapters 1 von der Verschiebestellung in die Arretierstellung wird der Drehknopf 3 um 90° verdreht. Hierbei dient die als Drehbewegungsumwandlungsorgan ausgebildete Ohrenhülse 14 zum einen dazu, die Verschlussscheibe 8 mit einer Anpresskraft zu beaufschlagen und gegen die Schiene 7 zu drücken. Zum anderen dient die Ohrenhülse 14 dazu, den Kipphebel 4 in seiner Position zur Schiene 7 festzulegen. Die Ohrenhülse 14 ist hierzu auf der der Schiene 7 zugewandten Seite des Drehknopfes 3 in einer Aufnahme derselben drehfest mit dem Drehknopf 3 verbunden und in Bezug auf die Drehachse D des Drehknopfes 3 koaxial zu diesem gelagert. Die Ohrenhülse 14 weist radial abragende Vorsprünge 15, 16 auf. Bei der eingeleiteten Drehung des Drehknopfes 3 wird die Ohrenhülse 14 infolge der rotatorischen Zwangsführung mitgedreht. Dabei gleiten die Vorsprünge 15, 16 an einer Kontur 17 des Gehäuses 2 entlang, bis die beiden Vorsprünge 15, 16 in der Endstellung des Drehknopfes 3 an den Armen 18, 19 des Kipphebels 4 anliegen und diesen in Bezug auf Lage der Ohrenhülse 14 festlegen. Die Festlegekraft wird hierbei durch eine Druckfeder 20 bewirkt, die zwischen der Verschlussscheibe 8 und der Ohrenhülse 14 koaxial zu diesen vorgesehen ist.

Aufgrund der im Gehäuse 2 vorgesehenen Kontur 17 wird die Ohrenhülse 14 bei der 90°-Drehung des Drehknopfes 3 entlang der Drehachse D in Richtung der Verschlussscheibe 8 bewegt. Indem sich der Abstand der Verschlussscheibe 8 und der Ohrenhülse 14 reduziert, wird die Druckfeder 20 komprimiert. Auf diese Weise entsteht die zur Arretierung des Kipphebels 4 erforderliche Anpresskraft. Gleichzeitig wird die Verschlussscheibe 8 über die verspannte Druckfeder 20 gegen die Schiene 7 gepresst.

Das Arretieren des vorgespannten Kipphebels 4 in der Arretierstellung und das gleichzeitige Anpressen der Verschlussscheibe 8 an die Schiene 7 garantieren einen Festsitz des Adapters 1 auf der Schiene 7. Die Schiene 7 ist in der Arretierstellung wie bei einer Zange zwischen dem Kipphebel 4 und der Verschlussscheibe 8 eingespannt, so dass sich der Adapter 1 weder abheben noch auf der Schiene 7 verschieben lässt.

Nach einer nicht dargestellten alternativen Ausführungsform des Adapters 1 kann statt der Ohrenhülse 4 eine Flachformfeder eingesetzt werden. In diesem Fall kann auf das Vorsehen einer Druckfeder 20 zur Verspannung der Verschlussscheibe 9 verzichtet werden.

Zum Verbringen des Adapters 1 aus der Arretierstellung in die Verschiebestellung wird der Drehknopf 3 um 90° zurückgedreht, so dass die Vorsprünge 15, 16 der Ohrenhülse 14 die Arme 18, 19 des Kipphebels 4 freigeben und sich entlang der Gehäusekontur 17 in die Ausgangsstellung zurückbegeben. Bei dieser Bewegung wird auch die Druckfeder 20, die zwischen Ohrenhülse 14 und Verschlussscheibe 8 vorgesehen ist, entlastet, und die Ohrenhülse 14 wird axial in Richtung des Drehknopfes 3 verschoben. Hierbei wird der zangenartige Sitz des Adapters 1 auf der Schiene 7 gelöst und die Anpresskraft der Verschlussscheibe 8 so weit reduziert, dass der Adapter 1 auf der Schiene 7 verschiebbar gehalten ist.

Um den Adapter 1 von der Schiene 7 abnehmen zu können, muss dieser zunächst nach oben gedrückt werden, bis die Nase 10' des Gehäuses 2 über den Vorsprung 21' der Schiene 7 herausragt. Dabei wird der Kipphebel 4 um die Schwenkachse S gegen die Drehfeder 9 in Richtung des Gehäuses 2 bewegt. Die beiden Arme 18, 19 des Kipphebels 4 weichen in einen Freiraum des Gehäuses 2 aus. In dieser Stellung kann der Adapter 1 mittels einer Schwenkbewegung von der Schiene 7 abgenommen werden, wobei der Kipphebel 4 im Bereich des Vorsprungs 21 an der Schiene 7 anliegt.

## Patentansprüche

1. Adapter (1) für ein Kraftfahrzeug-Haltesystems im Bereich eines Kofferraums des Kraftfahrzeugs mit einem Gehäuse (2) und einem an dem Gehäuse (2) gelagerten Drehelement (3) zur Verbringung des Adapters (1) von einer Verschiebestellung in eine Arretierstellung und umgekehrt, wobei die Drehachse (D) des Drehelementes (3) senkrecht zu einer Längsachse (L) einer in dem Kofferraum ortsfest angeordneten Schiene (7) angeordnet ist, und
- dass die Drehachse (D) des Drehelementes (3) und die Längsachse (L) der Schiene (7) einander schneiden, **dadurch gekennzeichnet,**
- **dass** an dem Gehäuse (2) ein um eine Schwenkachse (S) drehbar gelagerter, vorgespannter Kipphebel (4) angeordnet ist zur lösbaren Verbindung des Adapters (1) mit der Schiene (7),
- **dass** die Schwenkachse (S) des Kipphebels (4) senkrecht zu der Drehachse (D) des Drehelementes (3) und parallel zur Längsachse (L) der Schiene (7) angeordnet ist und
- **dass** zwischen dem Drehelement (3) und der Schiene (7) eine Ohrenhülse (14) angeordnet ist, derart, dass bei Drehung des Drehelementes (3) um 90° Vorsprünge (15, 16) der Ohrenhülse (14) entlang einer Kontur (17) des Gehäuses (2) gleiten bis in eine Endstellung, in der die Vorsprünge (15, 16) der Ohrenhülse (14) Arme (18, 19) des Kipphebels (4) in einer Arretierstellung desselben festlegen.

2. Adapter nach Anspruch 1, **dadurch gekennzeichnet, dass** die Vorspannung des Kipphebels (4) über eine Drehfeder (9) bewirkt wird.

3. Adapter nach Anspruch 1 oder 2, **dadurch gekennzeichnet, dass** der vorgespannte Kipphebel (4) und die Drehfeder (9) koaxial zueinander gelagert sind.

4. Adapter nach einem der Ansprüche 1 bis 3, **dadurch gekennzeichnet, dass** die Drehfeder (9) in Bezug auf eine Querebene (Q) des Gehäuses (2) symmetrisch angeordnet ist.

5. Adapter nach einem der Ansprüche 1 bis 4, **dadurch gekennzeichnet, dass** der Kipphebel (4) Augen (13) zur Aufnahme eines Kipphebelbolzens (12) aufweist.

6. Adapter nach einem der Ansprüche 1 bis 5, **dadurch gekennzeichnet, dass** eine vorgespannte Drehfeder (9) zwischen der Ohrenhülse (14) und einer an einer dem Drehelement (3) zugewandten Fläche der Schiene (7) anliegenden Verschlussscheibe (8) angeordnet ist, derart, dass in einer Arretierstellung des Kipphebels (4) auf die Vorsprünge (15, 16) der Ohrenhülse (14) eine dem Kipphebel (4) in der Arretierstellung festlegende Anpresskraft ausgeübt wird.

7. Adapter nach einem der Ansprüche 1 bis 6, **dadurch gekennzeichnet, dass** die Kontur (17) des Gehäuses (2) derart ausgestaltet ist, dass die vorgespannte Druckfeder (20) bei der Verbringung des Drehelementes (3) von der Ausgangsstellung (Verschiebestellung) in die Arretierstellung weiter gespannt wird.

8. Adapter nach einem der Ansprüche 1 bis 7, **dadurch gekennzeichnet, dass** die Verschlussscheibe (8) in einer Montagestellung des Adapters (1) mittels einer Bundschraube (22) derart festlegbar ist, dass die Verschlussscheibe (8) gegenüber der Bundschraube (22) um ca. 0,5 mm hervorsteht.

9. Adapter nach einem der Ansprüche 1 bis 8, **dadurch gekennzeichnet, dass** die Verschlussscheibe (8) mittels der Druckfeder (20) auf die Schiene (7) anpressbar ist.

## Claims

1. Adapter (1) for a motor vehicle holding system in the trunk of a motor vehicle with a housing (2) and a swivel element (3) seated against the housing (2) to shift the adapter from a shift position to a locked position and vice versa wherein the swivel axis (D) of the swivel element (3) is arranged perpendicular to a longitudinal axis (L) of a rail (7) fixedly disposed inside the trunk and wherein the swivel axis (D) of the swivel element (3) and the longitudinal axis (L) of the rail (7) are intersecting each other, **characterized in that** a biased tilting lever (4) is rota-tably arranged around a swivel axis (S) for detachably positioning the adapter (1) to the rail (7); **in that** the swivel axis (S) of the tilting lever (4) is arranged perpendicular to the swivel axis (D) of the swivel element (3) and parallel to the longitudinal axis (L) of the rail (7); and **in that** a lug type sleeve (14) is disposed between swivel element (3) and rail (7) in such a manner that as the swivel element (3) is caused to turn 90° the projections (15, 16) of said sleeve (14) will slide along a contour (17) of the housing (2) until an end position is reached in which said projections (15, 16) of the sleeve (14) will immobilize arms (18, 19) of the tilting lever (4) in a locked position thereof.

2. Adapter according to Claim 2, **characterized in that** the bias of tilting lever (4) is produced via a torsion spring (9).

3. Adapter according to Claim 1 or 2, **characterized in that** the biased tilting lever (4) and the torsion spring (9) are arranged in a coaxial relation to each other.

4. Adapter according to any of the Claims 1 to 3, **characterized in that** the biased tilting lever (4) and the torsion spring (9) are symmetrically positioned relative to a transversal plane (Q) of the housing (2).

5. Adapter according to any of the Claims 1 to 4, **characterized in that** the tilting lever (4) is provided with lugs (13) for a tilting lever pin (12) to engage in.

6. Adapter according to any of the preceding Claims 1 to 5, **characterized in that** a biased torsion spring (9) is disposed between the lug type sleeve (14) and an end disk (8) seated against a face of the rail (7) that opposes the swivel element (3) in such a way that with the tilting lever (4) in a locked state a contact pressure is exerted on said projections (15, 16) of the lug type sleeve (14) which keeps the tilting lever (4) in locked position.

7. Adapter according to any of the preceding Claims 1 to 6, **characterized in that** the contour (17) of the housing (2) is such that the biased torsion spring (20) gets further tensioned while the swivel element (3) is being brought from its initial (shift) position to its locked position.

8. Adapter according to any of the preceding Claims 1 to 7, **characterized in that** the end disk (8) is lockable in such a way by means of a collar screw (22) in a mounting position of the adapter (1) that the disk (8) will protrude about 0,5 mm beyond the collar screw (22).

9. Adapter according to any of the preceding Claims 1 to 8, **characterized in that** the end disk (8) can be pressed against the rail (7) by means of a compression spring (20).

## Revendications

1. Adaptateur (1) pour un système de support de véhicule automobile, prévu dans la zone d'un coffre dudit véhicule automobile, avec un boîtier (2) et un élément rotatif (3), monté sur le boîtier (2), pour amener l'adaptateur (1) d'une position de déplacement dans une position d'arrêt et inversement, l'axe de rotation (D) de l'élément rotatif (3) étant disposé perpendiculairement par rapport à un axe longitudinal (L) d'un rail (7), qui est installé fixement dans le coffre du véhicule automobile, et l'axe de rotation (D) de l'élément rotatif (3) et l'axe longitudinal (L) du rail (7) s'intersectent, **caractérisé en ce que**
- un levier basculant (4) précontraint, monté à rotation autour d'un axe de pivotement (S), est installé sur le boîtier (2) pour relier de manière amovible l'adaptateur (1) au rail (7),
- l'axe de pivotement (S) du levier basculant (4) est disposé perpendiculairement à l'axe de rotation (D) de l'élément rotatif (3) et parallèlement à l'axe longitudinal (L) du rail (7), et
- qu'entre l'élément rotatif (3) et le rail (7), est installée une douille papillon (14) de sorte que, lors d'une rotation de 90 ° de l'élément rotatif (3), des saillies (15, 16) de la douille papillon (14) glissent le long d'un contour (17) du boîtier (2), jusqu'à une position finale, dans laquelle les saillies (15, 16) de la douille papillon (14) fixent des bras (18, 19) du levier basculant (4) dans une position d'arrêt de celui-ci.

2. Adaptateur selon la revendication 1, **caractérisé en ce que** la précontrainte du levier basculant (4) est provoquée par un ressort de torsion (9).

3. Adaptateur selon revendication 1 ou 2, **caractérisé en ce que** le levier basculant (4) précontraint et le ressort de torsion (9) sont montés coaxialement l'un par rapport à l'autre.

4. Adaptateur selon l'une des revendications 1 à 3, **caractérisé en ce que** le ressort de torsion (9) est disposé symétriquement par rapport à un plan transversal (Q) du boîtier (2).

5. Adaptateur selon l'une des revendications 1 à 4, **caractérisé en ce que** le levier basculant (4) présente des oeillets (13) destinés à recevoir un boulon (12) du levier basculant.

6. Adaptateur selon l'une des revendications 1 à 5, **caractérisé en ce qu'**un ressort de torsion (9) précontraint est disposé entre la douille papillon (14) et une plaque de fermeture (8), adjacente à une surface du rail (7) orientée vers l'élément rotatif (3), de sorte que, dans une position d'arrêt du levier basculant (4), une force de pression, qui fixe le levier basculant (4) dans la position d'arrêt, est exercée sur les saillies (15, 16) de la douille papillon (14).

7. Adaptateur selon l'une des revendications 1 à 6, **caractérisé en ce que** le contour (17) du boîtier (2) est conçu de sorte que le ressort de pression (20) précontraint continue à être contraint quand l'élément rotatif (3) est amené de la position de départ (position de déplacement) dans la position d'arrêt.

8. Adaptateur selon l'une des revendications 1 à 7, **caractérisé en ce que**, dans une position de montage de l'adaptateur (1), la plaque de fermeture (8) peut être fixée au moyen d'une vis à collerette (22) de sorte que la plaque de fermeture (8) soit en saillie d'environ 0,5 mm par rapport à la vis collerette (22).

9. Adaptateur selon l'une des revendications 1 à 8, **caractérisé en ce que** la plaque de fermeture (8) peut être pressée sur le rail (7) au moyen d'un ressort de pression (20).
